# EUROPÄISCHE PATENTSCHRIFT

(11) **EP 2 616 710 B1**
(45) Veröffentlichungstag und Bekanntmachung des Hinweises auf die Patenterteilung: **22.04.2015**
(21) Anmeldenummer: 11738734.0
(22) Anmeldetag: 03.08.2011
(51) Int. Cl.: F16H 3/00, B60K 6/547, B60K 6/36, B60K 6/48

(54) **DOPPELKUPPLUNGSGETRIEBE IN VORGELEGEBAUWEISE**
DUAL CLUTCH TRANSMISSION WITH COUNTERSHAFT
BOÎTE DE VITESSES À DOUBLE EMBRAYAGE ET ARBRE SECONDAIRE

(30) Priorität: 13.09.2010 DE 102010040659
(43) Veröffentlichungstag der Anmeldung: 24.07.2013
(73) Patentinhaber: ZF Friedrichshafen AG, 88038 Friedrichshafen (DE)
(72) Erfinder: ROSEMEIER, Thomas, 88074 Meckenbeuren (DE); WAFZIG, Jürgen, 88097 Eriskirch (DE); DREIBHOLZ, Ralf, 88074 Meckenbeuren (DE); KAUFFELDT, Rudolf, 88131 Bodolz (DE); KALTENBACH, Johannes, 88048 Friedrichshafen (DE); RENNINGER, Markus, 8590 Romanshorn (DE); WECHS, Michael, 88138 Sigmarszell (DE)
(86) Internationale Anmeldenummer: PCT/EP2011/063332
(87) Internationale Veröffentlichungsnummer: WO 2012/034777

(56) Entgegenhaltungen:
- DE-A1-102005 005 163
- DE-A1-102006 007 010
- DE-A1-102006 054 281
- DE-A1-102007 049 271
- FR-A1- 2 934 659

## Beschreibung

Die Erfindung betrifft ein Doppelkupplungsgetriebe in Vorgelegebauweise gemäß der im Oberbegriff des Patentanspruches 1 näher definierten Art.

Ein aus der Praxis bekanntes Doppelkupplungsgetriebe in Vorgelegebauweise zur Darstellung verschiedener Übersetzungen für Vorwärtsfahrt und für Rückwärtsfahrt ist mit einer Getriebezentralwelle, einer konzentrisch dazu angeordneten Getriebehohlwelle, einer Vorgelegewelle und mit zwei Lastschaltelementen ausgeführt. Beide Lastschaltelemente sind eingangsseitig mit einem Antriebsaggregat in Wirkverbindung. Eine der beiden Lastschaltelemente ist ausgangsseitig mit der Getriebezentralwelle verbunden, während das andere der beiden Lastschaltelemente ausgangsseitig mit der Getriebehohlwelle verbunden ist. Die Getriebezentralwelle und die Getriebehohlwelle sind zur Darstellung einer Übersetzung über Zahnradstufen, die über Schalteinrichtungen in den Kraftfluss zu- und abschaltbar sind, mit der Vorgelegewelle verbindbar. Zusätzlich sind mehreren Schalteinrichtungen jeweils zwei Zahnradstufen zugeordnet.

Ein Doppelkupplungsgetriebe mit einer Doppelkupplung, deren Eingangsseite von einer Antriebswelle einer Antriebsmaschine antreibbar ist und deren Ausgangsseiten mit jeweils einer von zwei koaxial zueinander angeordneten Getriebeeingangswellen in Antriebsverbindung stehen, ist aus der DE 10 2005 005 163 A1 bekannt. Das Doppelkupplungsgetriebe ist mit einer Zwischenwelle bzw. genau einer Vorgelegewelle ausgebildet und weist an Wellen befestigte oder drehbar gelagerte Fest- bzw. Losräder sowie den Losrädern zugeordnete Schaltpakete auf. Über die Schaltpakete sind die Losräder zur Realisierung von Übersetzungen bzw. Übersetzungsstufen mit der jeweils zugehörigen Welle drehfest verbindbar. Die Schaltpakete sind jeweils zwei nicht direkt hintereinander folgenden Gängen zugeordnet.

Mit den beiden vorbeschriebenen Doppelkupplungsgetrieben sind jedoch lediglich sieben Übersetzungen für Vorwärtsfahrt darstellbar, weshalb mit den Doppelkupplungsgetrieben koppelbare Antriebsmaschinen, insbesondere Brennkraftmaschinen, über einen großen Betriebsbereich der Antriebsmaschinen besonders in Bezug auf ein Zugkraftangebot und einen geringen Kraftstoffverbrauch nicht in gewünschtem Umfang in ihrem optimalen Betriebsbereich betreibbar sind.

In der DE 10 2007 049 271 A1 ist ein Doppelkupplungsgetriebe mit zumindest zwei Vorgelegewellen beschrieben, um mehrere Übersetzungen für Vorwärts- und Rückwärtsfahrt darstellen zu können.

Aufgrund der Ausführung des Doppelkupplungsgetriebes mit zwei Vorgelegewellen weist dieses im Vergleich zu Doppelkupplungsgetrieben mit einer Vorgelegewelle einen höheren radialen Bauraumbedarf auf, der in verschiedenen Fahrzeugsystemen nicht in erforderlichem Umfang zur Verfügung steht.

Aus der FR 2 934 659 A1 und aus der DE 10 2006 007 101 A1 ist jeweils ein Doppelkupplungsgetriebe in Vorgelegebauweise, mit einer Getriebezentralwelle, mit einer konzentrisch dazu angeordneten Getriebehohlwelle, mit genau einer Vorgelegewelle und mit zwei Lastschaltelementen bekannt. Beide Lastschaltelemente sind eingangsseitig mit einem Antriebsaggregat verbindbar, wobei eines der beiden Lastschaltelemente ausgangsseitig mit der Getriebezentralwelle verbunden ist, während das andere der beiden Lastschaltelemente ausgangsseitig mit der Getriebehohlwelle verbunden ist. Zusätzlich sind die Getriebezentralwelle und die Getriebehohlwelle zur Darstellung einer Übersetzung über Zahnradstufen, die über Schalteinrichtungen in den Kraftfluss zuund abschaltbar sind, mit der Vorgelegewelle verbindbar. Mehreren Schalteinrichtungen sind jeweils zwei Zahnradstufen zugeordnet. Durch Zu- und Abschalten der Zahnradstufen sind wenigstens neun Übersetzungen für Vorwärtsfahrt darstellbar.

Der vorliegenden Erfindung liegt die Aufgabe zugrunde, ein Doppelkupplungsgetriebe in Vorgelegebauweise zur Verfügung zu stellen, das sowohl in radialer Richtung als auch in axialer Richtung einen geringen Bauraumbedarf aufweist und mittels dem mehr als sieben Übersetzungen für Vorwärtsfahrt darstellbar sind.

Erfindungsgemäß wird diese Aufgabe mit einem Doppelkupplungsgetriebe mit den Merkmalen des Patentanspruches 1 gelöst.

Das erfindungsgemäße Doppelkupplungsgetriebe in Vorgelegebauweise ist mit einer Getriebezentralwelle, einer konzentrisch dazu angeordneten Getriebehohlwelle, genau einer Vorgelegewelle und mit zwei Lastschaltelementen ausgeführt. Beide Lastschaltelemente sind eingangsseitig mit einem Antriebsaggregat in Wirkverbindung bringbar, während eines der beiden Lastschaltelemente ausgangsseitig mit der Getriebezentralwelle verbunden ist und das andere der beiden Lastschaltelemente ausgangsseitig mit der Getriebehohlwelle verbunden ist. Demnach ist eine Drehzahl des Antriebsaggregats durch selektives Schließen der beiden Lastschaltelemente entweder auf die Getriebezentralwelle oder auf die Getriebehohlwelle übertragbar. Die Getriebezentralwelle und die Getriebehohlwelle sind zur Darstellung einer Übersetzung über Zahnradstufen, die über Schalteinrichtungen in den Kraftfluss zu- und abschaltbar sind, mit der Vorgelegewelle verbindbar. Des Weiteren sind mehreren Schalteinrichtungen jeweils zwei Zahnradstufen zugeordnet.

Erfindungsgemäß sind wenigstens neun Übersetzungsstufen für Vorwärtsfahrt darstellbar und auf der Vorgelegewelle ist eine dazu koaxial angeordnete Hohlwelle vorgesehen, die über eine der Schalteinrichtungen drehfest mit der Vorgelegewelle koppelbar ist und mit der wenigstens zwei Zahnrädern der Zahnradstufen drehfest verbunden sind. Auf der Getriebezentralwelle oder der Getriebehohlwelle ist eine koaxial dazu angeordnete weitere Hohlwelle vorgesehen, die über eine der Schalteinrichtungen mit der Getriebezentralwelle oder der Getriebehohlwelle verbindbar ist und mit der wenigstens zwei weiteren Zahnrädern der Zahnradstufen drehfest verbunden sind. Wenigstens drei Übersetzungen sind durch schaltelementseitiges Zuschalten über zugeordnete Schaltelemente der Schalteinrichtungen und das jeweils zugeordnete Lastschaltelement von jeweils drei der Zahnradstufen in den Kraftfluss darstellbar, über die durch jeweils alleiniges schaltelementseitiges Zuschalten über zugeordnete Schaltelemente der Schalteinrichtungen und das jeweils zugeordnete Lastschaltelement in den Kraftfluss jeweils eine Übersetzung darstellbar ist.

Die Ausführung des erfindungsgemäßen Doppelkupplungsgetriebes mit genau einer Vorgelegewelle sowie der auf der Getriebezentralwelle oder der Getriebehohlwelle angeordneten Hohlwelle und der weiteren auf der Vorgelegewelle vorgesehenen Hohlwelle bietet in Verbindung mit der Darstellung von wenigstens drei Übersetzungen als so genannte Windungsgänge die Möglichkeit, eine Vielzahl an Übersetzungen mit geringem radialen als auch axialen Bauraumbedarf und zusätzlich mit geringem Gesamtgewicht des Doppelkupplungsgetriebes darzustellen und eine Antriebsmaschine, vorzugsweise eine Brennkraftmaschine in gewünschtem Umfang in deren optimalen Betriebsbereich betreiben zu können.

Des Weiteren sind die Übersetzungen aufgrund der Mehrfachverwendung der Schalteinrichtungen mit einer geringen Anzahl an Aktoren zur Betätigung der Schalteinrichtungen darstellbar, wodurch das Doppelkupplungsgetriebe auch kostengünstig herstellbar ist.

Ist eine der drei Übersetzungen, die durch schaltelementseitiges Zuschalten von jeweils drei der Zahnradstufen in den Kraftfluss darstellbar sind, eine erste Übersetzung für Vorwärtsfahrt, und eine weitere Übersetzung der drei Übersetzungen eine neunte Übersetzung für Vorwärtsfahrt, ist die mechanische Spreizung des Doppelkupplungsgetriebes reduziert, womit Drehzahlverluste im Bereich des Doppelkupplungsgetriebes gering gehalten werden.

Des Weiteren ist das erfindungsgemäße Doppelkupplungsgetriebe aufgrund seiner Ausführung durch eine gute Lastschaltfähigkeit gekennzeichnet und auch auf konstruktiv einfache Art und Weise mit einer elektrischen Maschine kombinierbar.

Bei einer vorteilhaften Ausführungsform des erfindungsgemäßen Doppelkupplungsgetriebes sind zwei der zur Darstellung der drei Übersetzungsstufen in den Kraftfluss zuzuschaltenden Zahnradstufen jeweils identisch und die jeweils dritte Zahnradpaarung variiert. Aufgrund der Mehrfachverwendung der Zahnradstufen ist eine Vielzahl an Übersetzungen bei gleichzeitig geringem Bauraumbedarf des Doppelkupplungsgetriebes darstellbar.

Weitere bauraumgünstige Ausführungsformen des erfindungsgemäßen Doppelkupplungsgetriebes sind mit fünf Schalteinrichtungen ausgebildet, über die jeweils zwei Zahnradstufen in den Kraftfluss zuschaltbar sind, und/oder umfassen acht Radsatzebenen, die jeweils Stirnradstufen mit diskreten Übersetzungen aufweisen.

Weitere Vorteile und vorteilhafte Ausführungsformen des erfindungsgemäßen Doppelkupplungsgetriebes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigen:
- Fig. 1: ein Räderschema einer ersten beispielhaften Ausführungsform des erfindungsgemäßen Doppelkupplungsgetriebes;
- Fig. 2: eine Schaltmatrix des Doppelkupplungsgetriebes gemäß Fig. 1;
- Fig. 3: eine tabellarische Übersicht der Zuordnung zwischen Schaltelementen von Schalteinrichtungen und Zahnradstufen des Doppelkupplungsgetriebes gemäß Fig. 1;
- Fig. 4: ein Räderschema einer zweiten beispielhaften Ausführungsform des erfindungsgemäßen Doppelkupplungsgetriebes;
- Fig. 5: ein Räderschema einer dritten beispielhaften Ausführungsform des erfindungsgemäßen Doppelkupplungsgetriebes; und
- Fig. 6: ein Räderschema einer vierten beispielhaften Ausführungsform des erfindungsgemäßen Doppelkupplungsgetriebes.

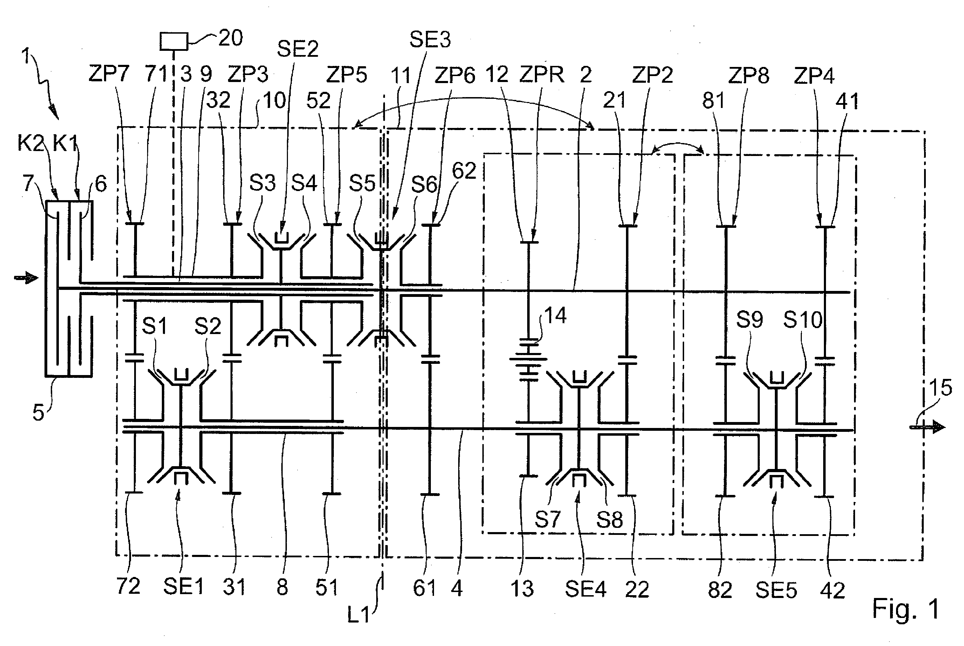

Fig. 1 zeigt ein Doppelkupplungsgetriebe 1 in Vorgelegebauweise mit 17 Zahnrädern, mit einer Getriebezentralwelle 2, mit einer konzentrisch dazu angeordneten Getriebehohlwelle 3, mit genau einer Vorgelegewelle 4 und mit zwei Lastschaltelementen K1, K2, die vorliegend als reibschlüssige Lamellenkupplungen ausgeführt sind. Mit 5 bezeichnete Eingangselemente der Lastschaltelemente K1, K2 sind mit einem in der Zeichnung nicht näher dargestellten Antriebsaggregat, beispielsweise einer Brennkraftmaschine eines Fahrzeugantriebsstranges, verbunden oder wirkverbunden. Ein mit 6 bezeichnetes Ausgangselement des Lastschaltelementes K1 ist mit der Getriebehohlwelle 3 verbunden, während ein mit 7 bezeichnetes Ausgangselement des Lastschaltelementes K2 mit der Getriebezentralwelle 2 drehfest gekoppelt ist. Die in der Zeichnung dargestellte konstruktive Ausbildung der beiden Lastschaltelemente K1, K2 ist als beispielhaft anzusehen und liegt im Ermessen des Fachmanns. So sind die beiden angetriebenen Eingangselemente 5 der Lastschaltelemente K1, K2 hier beispielhaft als ein für beide Lastschaltelemente K1, K2 gemeinsamer Außenlamellenträger ausgebildet und die beiden Ausgangselemente 6, 7 der Lastschaltelemente K1, K2 entsprechend jeweils als Innenlamellenträger.

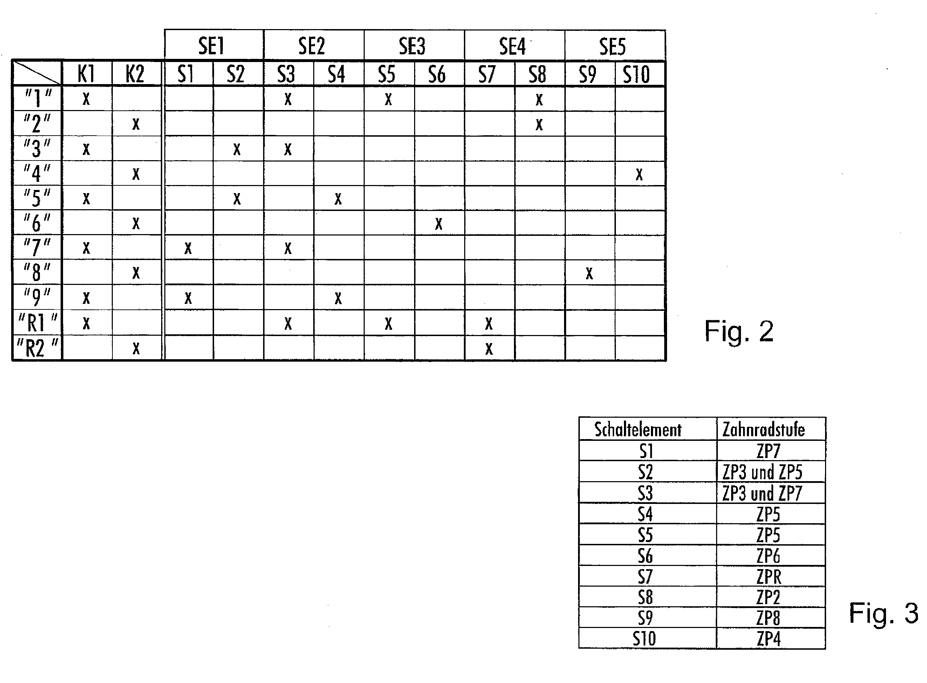

Die Getriebezentralwelle 2 und die Getriebehohlwelle 3 sind zur Darstellung von in Fig. 2 näher aufgeführten neun Übersetzungen "1" bis "9" für Vorwärtsfahrt und zwei Übersetzungen "R1 ", "R2" für Rückwärtsfahrt über genau acht Zahnradstufen ZP2, ZP3, ZP4, ZP5, ZP6, ZP7, ZP8 und ZPR, die über genau fünf Schalteinrichtungen SE1 bis SE5 in den Kraftfluss des Doppelkupplungsgetriebes zu- und abschaltbar sind, mit der Vorgelegewelle 4 verbindbar. Die acht Zahnradstufen ZP2 bis ZPR bilden genau acht in axialer Richtung nebeneinander angeordnete Zahnradebenen. Den fünf Schalteinrichtungen SE1 bis SE5 sind jeweils zwei Zahnradstufen ZP7, ZP3 bzw. ZP3, ZP5 bzw. ZP5, ZP6 bzw. ZPR, ZP2 bzw. ZP8, ZP4 zugeordnet.

Die Schalteinrichtungen SE1 bis SE5 sind vorliegend als so genannte Doppelsynchronisierungen ausgeführt und umfassen jeweils zwei Schaltelemente S1, S2 bzw. S3, S4 bzw. S5, S6 bzw. S7, S8 bzw. S9, S10, über die jeweils wenigstens eine der Zahnradstufen ZP2 bis ZPR mit der Getriebezentralwelle 2, der Getriebehohlwelle 3 oder der Vorgelegewelle 4 koppelbar und in deren Bereich Differenzdrehzahlen in gewissem Umfang ausgleichbar bzw. reduzierbar sind.

Auf der Vorgelegewelle 4 ist eine dazu koaxial angeordnete Hohlwelle 8 vorgesehen, die über das Schaltelement S2 der Schalteinrichtung SE1 drehfest mit der Vorgelegewelle 4 verbindbar ist und mit der vorliegend jeweils ein Zahnrad 31 der Zahnradstufe ZP3 und ein Zahnrad 51 der Zahnradstufe ZP5 drehfest verbunden sind. Des Weiteren ist vorliegend auf der Getriebehohlwelle 3 eine dazu koaxial angeordnete weitere Hohlwelle 9 vorgesehen, die über das Schaltelement S3 der Schalteinrichtung SE2 mit der Getriebehohlwelle 3 drehfest verbindbar ist und mit der ein weiteres Zahnrad 32 der Zahnradstufe ZP3 und ein Zahnrad 71 der Zahnradstufe ZP7 drehfest verbunden sind.

Alternativ zu der vorbeschriebenen Ausführung des Doppelkupplungsgetriebes 1 mit den fünf Schalteinrichtungen SE1 bis SE5, die jeweils zwei Schaltelemente S1 und S2, S3 und S4, S5 und S6, S7 und S8, S9 und S10 umfassen, besteht auch die Möglichkeit, eine oder mehrere der Schalteinrichtungen SE1 bis SE5 als getrennte Schalteinrichtungen auszuführen, wobei dann mehr als fünf Aktoren zum Betätigen der einzelnen Schaltelemente S1 bis S10 vorzusehen sind.

Über die beiden Lastschaltelemente K1 und K2 ist jeweils ein an den Eingangselementen 5 anstehendes Drehmoment eines Antriebsaggregates wahlweise auf die Getriebezentralwelle 2 oder die Getriebehohlwelle 3 führbar. Um die verschiedenen Übersetzungen "1" bis "R2" darstellen zu können, sind die Zahnradstufen ZP2 bis ZPR in der nachfolgend näher beschriebenen Art und Weise über die Schalteinrichtungen SE1 bis SE5 bzw. deren Schaltelemente S1 bis S10 in den Kraftfluss des Doppelkupplungsgetriebes 1 zuzuschalten bzw. aus diesem abzuschalten.

Um im Bereich der beiden Lastschaltelemente K1 und K2 jeweils einen zugkraftunterbrechungsfreien Übersetzungswechsel durchführen zu können, wird jeweils im Bereich eines aktuell im lastfreien Betriebszustand vorliegenden Teilgetriebes 10 oder 11 durch entsprechendes Öffnen und Schließen der betreffenden Schaltelemente S1 bis S10 die aktuell einzulegende Zielübersetzung vorgewählt und anschließend das aktuell geschlossene Lastschaltelement K1 oder K2 in einen geöffneten Betriebszustand überführt, während das aktuell geöffnete Lastschaltelement K2 oder K1 während einer Überschneidungsschaltung in seinen geschlossenen Betriebszustand überführt wird.

Die Übersetzungen "2" bis "8" für Vorwärtsfahrt und die Übersetzung "R2" für Rückwärtsfahrt sind im Doppelkupplungsgetriebe 1 jeweils durch alleiniges schaltelementseitiges Zuschalten der Zahnradpaarungen ZP2, ZP3, ZP4, ZP5, ZP6, ZP7, ZP8 oder ZPR darstellbar.

Die erste Übersetzung "1" für Vorwärtsfahrt ist durch gleichzeitiges schaltelementseitiges Zuschalten der drei Zahnradstufen ZP3, ZP5 und ZP2 in den Kraftfluss des Doppelkupplungsgetriebes 1 darstellbar und stellt somit einen so genannten Windungsgang dar. Des Weiteren ist die neunte Übersetzung "9" für Vorwärtsfahrt durch gleichzeitiges schaltelementseitiges Zuschalten der drei Zahnradstufen ZP5, ZP3 und ZP7 im Doppelkupplungsgetriebe 1 eingelegt, während die Übersetzung "R1" für Rückwärtsfahrt durch gleichzeitiges schaltelementseitiges Zuschalten der drei Zahnradstufen ZP3, ZP5 und ZPR im Doppelkupplungsgetriebe 1 vorliegt. Damit stellen auch die neunte Übersetzung "9" für Vorwärtsfahrt und die Übersetzung "R1" für Rückwärtsfahrt so genannte Windungsgänge dar.

Die beiden Zahnradstufen ZP3 und ZP5 sind immer zur Darstellung der drei Übersetzungen "1", "9" und "R1" in den Kraftfluss zuzuschalten, während die Zahnradstufe ZP2, die Zahnradstufe ZP7 oder die Zahnradstufe ZPR jeweils zusätzlich zur Darstellung der Übersetzungen "1 ", "9" oder "R1" zuzuschalten sind.

Die vier Zahnradstufen ZPR, ZP2, ZP8 und ZP4 sind über die Schalteinrichtungen SE4 und SE5 mit der Vorgelegewelle 4 in Wirkverbindung bringbar, wobei ein Zahnrad 12 der Zahnradstufe ZPR, ein Zahnrad 21 der Zahnradstufe ZP2, ein Zahnrad 81 der Zahnradstufe ZP8 und ein Zahnrad 41 der Zahnradstufe ZP4 jeweils als Festräder ausgeführt sind und mit der Getriebezentralwelle 2 drehfest verbunden sind. Des Weiteren ist jeweils ein Zahnrad 13 der Zahnradstufe ZPR, ein Zahnrad 22 der Zahnradstufe ZP2, ein Zahnrad 82 der Zahnradstufe ZP8 und ein Zahnrad 42 der Zahnradstufe ZP4 als Losrad ausgebildet und drehbar auf der Vorgelegewelle 4 angeordnet. Die beiden Zahnräder 12 und 13 stehen jeweils mit einem Zwischenrad 14 in Eingriff, womit im Bereich der Zahnradstufe ZPR die für die Darstellung eines Rückwärtsfahrtbetriebes erforderliche Drehrichtungsumkehr im Doppelkupplungsgetriebe 1 darstellbar ist. Die Losräder 13, 22, 82 und 42 der Zahnradstufen ZPR, ZP2, ZP8 und ZP4 sind jeweils über die Schaltelemente S7, S8, S9 oder S10 der Schalteinrichtungen S4 oder S5 drehfest mit der Vorgelegewelle 4 verbindbar.

Ein weiteres als Losrad ausgeführtes Zahnrad 72 der Zahnradstufe ZP7 ist auf der Vorgelegewelle 4 drehbar angeordnet und über das Schaltelement S1 der Schalteinrichtung SE1 drehfest mit der Vorgelegewelle 4 koppelbar, während ein Zahnrad 61 der Zahnradstufe ZP6 als Festrad ausgeführt ist und drehfest mit der Vorgelegewelle 4 verbunden ist. Ein weiteres Zahnrad 62 der Zahnradstufe ZP6 ist als Losrad ausgeführt und vorliegend drehbar auf der Getriebezentralwelle 2 angeordnet und über das Schaltelement S6 mit dieser drehfest verbindbar.

Ein zweites Zahnrad 52 der Zahnradstufe ZP5 ist als Losrad ausgebildet, das drehbar auf der Getriebehohlwelle 3 angeordnet ist und über das Schaltelement S4 der Schalteinrichtung SE2 mit der Getriebehohlwelle 3 oder über das Schaltelement S5 der Schalteinrichtung SE3 mit der Getriebezentralwelle 2 drehfest verbindbar ist. Zusätzlich ist das weitere Zahnrad 52 der Zahnradstufe ZP5, das mit dem drehfest mit der Hohlwelle 8 verbundenen Zahnrad 51 kämmt, über das Schaltelement S2 der Schalteinrichtung SE1 auch mit der Vorgelegewelle 4 koppelbar.

Die Zahnradstufen ZP7 und ZP3 sind dem ersten Teilgetriebe 10 und die Zahnradstufen ZP6, ZPR, ZP2, ZP8 und ZP4 sind dem zweiten Teilgetriebe zugeordnet. Aufgrund der vorbeschriebenen möglichen Kopplung der Zahnradstufe ZP5 sowohl mit der Getriebehohlwelle 3 als auch mit der Getriebezentralwelle 2 ist die Zahnradstufe ZP5 beiden Teilgetrieben 10 und 11 zuordenbar, wobei diese doppelte Zuordnung einem zugkraftunterbrechungsfreien Übersetzungswechsel zwischen einer ungeraden Übersetzung "1 ", "3, "5", "7", "9" in Richtung einer geraden Übersetzung "2", "4", "6", "8" nicht entgegensteht, mit Ausnahme von drei nur mit Zugkraftunterbrechung zu schaltenden Direktschaltungen von Übersetzung "4", "6" und "8" direkt nach Übersetzung "1".

Die Schaltelemente S1 bis S10 sind zur Darstellung der Übersetzungen "1" bis "9" für Vorwärtsfahrt und zur Darstellung der Übersetzungen "R1" und "R2" für Rückwärtsfahrt gemäß der in Fig. 2 näher dargestellten Schaltlogik zu betätigen, wobei jeweils die Schaltelemente S1 bis S10 zur Darstellung einer der Übersetzungen "1" bis "R2" zu schließen ist oder in geschlossenen Betriebszustand zu halten ist, deren Zellen jeweils mit dem Buchstaben X befüllt ist, während die weiteren Schaltelemente S1 bis S10, deren zugeordnete Zellen leer sind, in ihren geöffneten Betriebszustand zu überführen bzw. in diesem zu belassen sind. Gleichzeitig ist jeweils das mit dem Buchstaben X gekennzeichnete Lastschaltelement K1 oder K2 in geschlossenen Betriebszustand zu überführen, während das jeweils andere Lastschaltelement K2 oder K1, dessen zugeordnete Zelle frei ist, zu öffnen ist.

Der in Fig. 1 dargestellte Radsatz ist durch die nachfolgend näher beschriebene unterschiedliche Positionierung der Zahnradstufen ZP2 bis ZPR zueinander sowie der Schalteinrichtungen SE1 bis SE5 bzw. deren Schaltelementen S1 bis S10 funktionsgleich veränderbar, wobei die vorzugsweise als Synchronisierungen ausgeführten Schaltelemente S1 bis S10 gemäß der in Fig. 3 dargestellten Tabelle den Zahnradstufen ZP2 bis ZPR fest zugeordnet sind. Aufgrund dieser festen Zuordnung verändert sich die in Fig. 2 gezeigte Schaltmatrix durch eine von der in Fig. 1 gezeigten Anordnung der Zahnradstufen ZP2 bis ZPR verschiedenen Positionierung der vorliegend als Stirnradstufen ausgebildeten Zahnradstufen ZP2 bis ZPR nicht.

Das Schaltelement S1 ist der Zahnradstufe ZP7, das Schaltelement S2 ist den Zahnradstufen ZP3 und ZP5, das Schaltelement S4 ist der Zahnradstufe ZP5, das Schaltelement S5 ist der Zahnradstufe ZP5, das Schaltelement S6 ist der Zahnradstufe ZP6, das Schaltelement S7 ist der Zahnradstufe ZPR, das Schaltelement S8 ist der Zahnradstufe ZP2, das Schaltelement S9 ist der Zahnradstufe ZP8 und das Schaltelemente S10 ist der Zahnradstufe ZP4 zugeordnet.

Bei der Darstellung gemäß Fig. 1 sind die Zahnradstufen ZP7, ZP3 und ZP5 des ersten Teilgetriebes 10 zwischen den Lastschaltelementen K1 und K2 und den dem zweiten Teilgetriebe zugeordneten Zahnradstufen ZP6, ZPR, ZP2, ZP8 und ZP4 angeordnet. Bei einer hiervon abweichenden Ausführungsform des Doppelkupplungsgetriebes 1 sind die Zahnradstufen ZP6, ZPR, ZP2, ZP8 und ZP4 zwischen den Lastschaltelementen K1 und K2 und den Zahnradstufen ZP5, ZP3, und ZP7 des ersten Teilgetriebes 10 angeordnet, wobei die von Fig. 1 abweichende Anordnungsvariante einen Tausch der beiden Teilgetriebe 10 und 11 darstellt, der durch Spiegeln des Doppelkupplungsgetriebes 1 entlang der Linie L1 zu vollziehen ist.

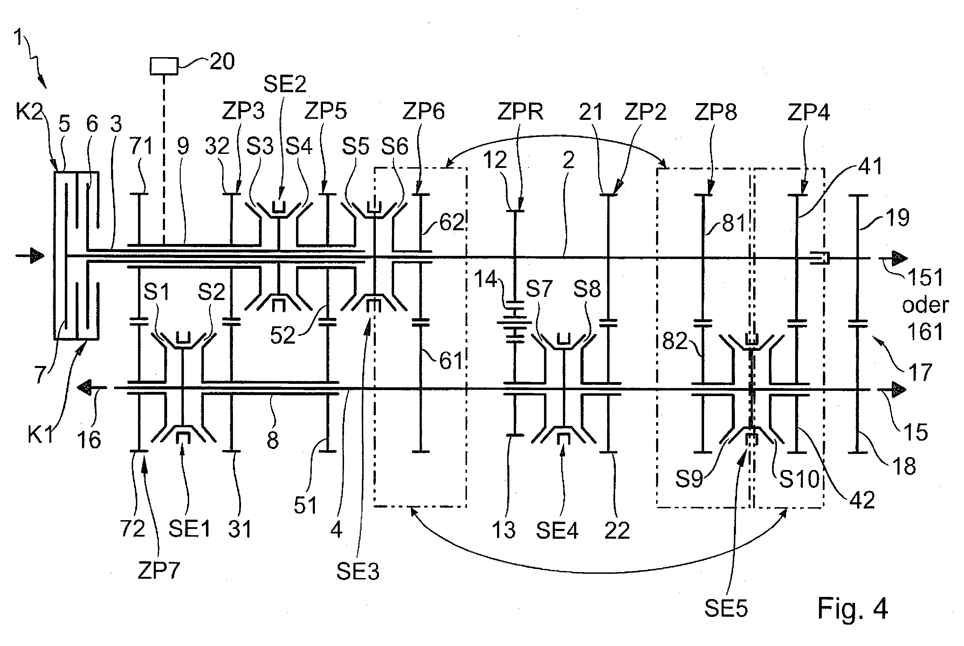

Alternativ zu letztbeschriebener Anordnungsvariante der Zahnradstufen ZP2 bis ZPR oder kumulativ dazu sind die Zahnradstufen ZP6, ZPR, ZP2, ZP8 und ZP4 in der zu Fig. 4 bis Fig. 6 näher beschriebenen Art und Weise in axialer Erstreckung der Getriebezentralwelle 2 des Doppelkupplungsgetriebes 1 untereinander vertauschbar ohne die zu Fig. 1 näher beschriebene Funktionalität des Doppelkupplungsgetriebes 1 zu verändern. Zusätzlich sind die Zahnradstufen ZPR und ZP2 sowie die Zahnradstufen ZP8 und ZP4 abweichend von der in Fig. 1 gezeigten Anordnungsvariante entlang einer weiteren Linie L2 in gespiegelter Form vorsehbar, wobei ein Zuschalten der Zahnradstufen ZPR, ZP2, ZP8 und ZP4 durch Ankopplung der Zahnradstufen ZPR, ZP2, ZP8 und ZP4 an die Vorgelegewelle 4, an die Getriebezentralwelle 2 oder an die Getriebehohlwelle 3 erfolgt.

Die Zahnradstufen ZP8 und ZP4 sind über die gemeinsame Schalteinrichtung SE5 in den Kraftfluss zuschaltbar, wobei die Zahnradstufe ZP8 in axialer Erstreckung der Getriebezentralwelle 2 in Bezug auf die zugeordnete Schalteinrichtung SE5 auf einer den Lastschaltelementen K1 und K2 zugewandten Seite der Schalteinrichtung SE5 und die Zahnradstufe ZP4 auf einer den Lastschaltelementen K1 und K2 abgewandten Seite der Schalteinrichtung SE5 angeordnet ist.

Alternativ hierzu ist die Zahnradstufe ZP4 auf der den Lastschaltelementen K1 und K2 zugewandten Seite der Schalteinrichtung SE5 und die Zahnradstufe ZP8 auf der den Lastschaltelementen K1 und K2 abgewandten Seite der Schalteinrichtung SE5 anordenbar.

Des Weiteren sind die beiden Zahnradstufen ZPR und ZP2 des zweiten Teilgetriebes 11 über die gemeinsame Schalteinrichtung SE4 in den Kraftfluss des Doppelkupplungsgetriebes 1 zuschaltbar. Auch hier besteht die Möglichkeit, eine der beiden Zahnradstufen ZPR oder ZP2 in axialer Erstreckung der Getriebezentralwelle 2 in Bezug auf die zugeordnete Schalteinrichtung SE4 auf einer den Lastschaltelementen K1 und K2 zugewandten Seite der Schalteinrichtung SE4 und die jeweils andere Zahnradstufe ZP2 oder ZPR auf einer den Lastschaltelementen K1 und K2 abgewandten Seite der Schalteinrichtung SE4 anzuordnen.

Wiederum alternativ zu den vorbeschriebenen Positionierungen der Zahnradstufen ZP2 bis ZPR des Doppelkupplungsgetriebes 1 oder kumulativ dazu besteht auch die Möglichkeit, die zwei Zahnradstufen ZP8 und ZP4 des zweiten Teilgetriebes 11 in axialer Erstreckung der Getriebezentralwelle 2 zwischen den Lastschaltelementen K1 und K2 und den zwei Zahnradstufen ZPR und ZP2 des zweiten Teilgetriebes 11 oder die Zahnradstufen ZPR und ZP2 in axialer Erstreckung der Getriebezentralwelle zwischen den Lastschaltelementen K1 und K2 und den wenigstens zwei Zahnradstufen ZP8 und ZP4 anzuordnen.

Wiederum alternativ oder kumulativ zu den vorbeschriebenen Anordnungsvarianten der Zahnradstufen ZP2 bis ZPR des Doppelkupplungsgetriebes 1 besteht auch die Möglichkeit, eine der Zahnradstufen ZP8 oder ZP4 mit der Zahnradstufe ZP6 zu vertauschen.

Die verschiedenen Anordnungsvarianten der Zahnradstufen ZP2 bis ZPR zueinander ergeben 256 funktionsgleiche Varianten des Doppelkupplungsgetriebes 1.

In Abhängigkeit der jeweils vorliegenden Anordnungsvariante der Zahnradstufen ZP2 bis ZPR des Doppelkupplungsgetriebes 1 ist die weitere Hohlwelle 9 entweder direkt auf der Getriebezentralwelle 2 oder wie in der Zeichnung dargestellt auf der Getriebehohlwelle 3 angeordnet. Des Weiteren ist die Zahnradstufe ZP6 in Abhängigkeit der jeweiligen Anordnungsvariante über das Schaltelement S6 mit der Getriebezentralwelle 2 oder der Getriebehohlwelle 6 koppelbar.

Die Zahnradstufe ZP3 und die Zahnradstufe ZP7 sind in Abhängigkeit der jeweils gewählten Anordnungsvariante der Zahnradstufen ZP2 bis ZPR des Doppelkupplungsgetriebes 1 über die Schaltelemente S1, S2 und S3 der Schalteinrichtungen SE1 und SE2 mit der Getriebezentralwelle 2 oder der Getriebehohlwelle 3 sowie mit der Vorgelegewelle 4 koppelbar.

Wiederum in Abhängigkeit der Anordnung der Zahnradstufe ZP6 und der Zahnradstufen ZP4 und ZP8 ist die Zahnradstufe ZP6 und eine der Zahnradstufen ZP4 oder ZP8 über eine gemeinsame Schalteinrichtung in den Kraftfluss zuschaltbar, während die Zahnradstufe ZP8 oder ZP4 und die Zahnradstufe ZP5, die mit der Getriebezentralwelle 2, der Getriebehohlwelle 3 und mit der Vorgelegewelle 4 koppelbar ist, jeweils über eine gemeinsame Schalteinrichtung in den Kraftfluss zuschaltbar sind.

Die Losräder 13, 22, 82 und 42 der Zahnradstufen ZPR, ZP2, ZP8 und ZP4 sind in Abhängigkeit der jeweils vorliegenden Anordnungsvariante der Zahnradstufen ZP2 bis ZPR des Doppelkupplungsgetriebes 1 auf der Getriebezentralwelle 2, der Getriebehohlwelle 3 und/oder auf der Vorgelegewelle 4 angeordnet und über die Schalteinrichtung SE4 bzw. die Schalteinrichtung SE5 jeweils mit einer der Wellen koppelbar.

Bei dem in Fig. 1 dargestellten Ausführungsbeispiel des Doppelkupplungsgetriebes 1 ist ein Abtrieb 15 des Doppelkupplungsgetriebes 1 koaxial zur Vorgelegewelle 4 vorgesehen und das Doppelkupplungsgetriebe 1 lediglich mit einem Getriebeausgang ausgebildet. Der Abtrieb 15 des Doppelkupplungsgetriebes ist über entsprechende Einrichtungen mit zumindest einer antreibbaren Fahrzeugachse koppelbar.

Ist das Doppelkupplungsgetriebe 1 gemäß Fig. 1 Teil eines Allradfahrzeugantriebsstranges, ist dem Doppelkupplungsgetriebe 1 eine Verteilergetriebeeinrichtung nachzuschalten, über die das im Bereich der Zahnradstufe ZP4 über den Abtrieb 15 aus dem Doppelkupplungsgetriebe 1 geführte Drehmoment zwischen mehreren antreibbaren Fahrzeugachsen verteilbar ist.

Alternativ hierzu besteht auch die Möglichkeit, das an der Vorgelegewelle 4 anliegende Drehmoment gemäß der in Fig. 4 bis Fig. 6 dargestellten Art und Weise sowohl im Bereich der Zahnradstufe ZP4 über den Abtrieb 15 und zusätzlich im Bereich der Zahnradstufe ZP7 über einen weiteren Abtrieb 16 aus dem Doppelkupplungsgetriebe 1 zu führen, wobei sowohl der Abtrieb 15 als auch der weitere Abtrieb 16 koaxial zur Vorgelegewelle 4 angeordnet sind.

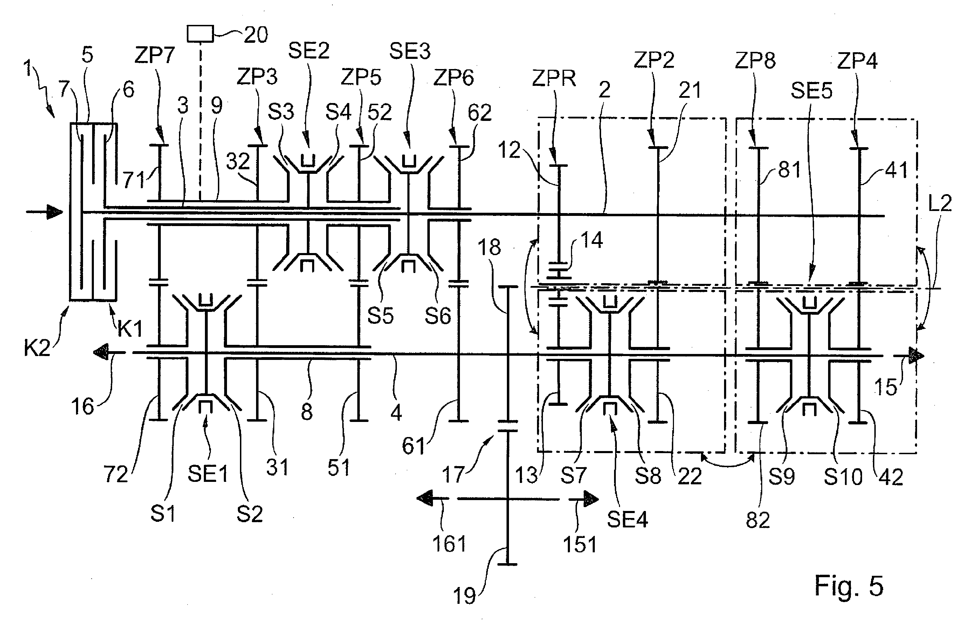

Alternativ zu der koaxialen Anordnung der Abtriebe 15 und 16 zur Vorgelegewelle 4 besteht auch die Möglichkeit, den Abtrieb 15 und/oder den weiteren Abtrieb 16 in der in Fig. 4 bis Fig. 6 zusätzlich gezeigten Art und Weise mit einem Achsversatz zur Vorgelegewelle 4 und/oder zur Getriebezentralwelle 2 aus dem Doppelkupplungsgetriebe 1 zu führen, wobei die achsversetzte Variante des Abtriebs bzw. des weiteren Abtriebs jeweils unter dem Bezugszeichen 151 oder 161 näher bezeichnet ist. Der Achsversatz wird hierbei auf konstruktiv einfache Art und Weise über ein zusätzliches Abtriebskonstantenzahnradpaar 17 realisiert, wobei ein als Festrad ausgeführtes Zahnrad 18 des Abtriebskonstantenzahnradpaars 17 in der in Fig. 4 und Fig. 5 dargestellten Art und Weise drehfest mit der Vorgelegewelle 4 verbunden ist. Das Zahnrad 18 kämmt mit einem Zahnrad 19 des Abtriebskonstantenzahnradpaares 17, das mit dem Abtrieb 15 und/oder dem Abtrieb 16 verbunden ist.

Bei einem in Fig. 4 gezeigten Ausführungsbeispiel des Doppelkupplungsgetriebes 1 ist das Abtriebskonstantenzahnradpaar 17 in axialer Erstreckung der Getriebezentralwelle 2 auf der zu der Zahnradstufe ZP8 abgewandten Seite der Zahnradstufe ZP4 vorgesehen, wobei das Zahnrad 18 koaxial zur Getriebezentralwelle 2 angeordnet und drehbar auf dieser gelagert ist.

Bei einem in Fig. 5 gezeigten Ausführungsbeispiel des Doppelkupplungsgetriebes 1 ist das Zahnrad 19 des Abtriebskonstantenzahnradpaars 17 räumlich gesehen axial zwischen der Zahnradstufe ZP6 und der Zahnradstufe ZPR angeordnet.

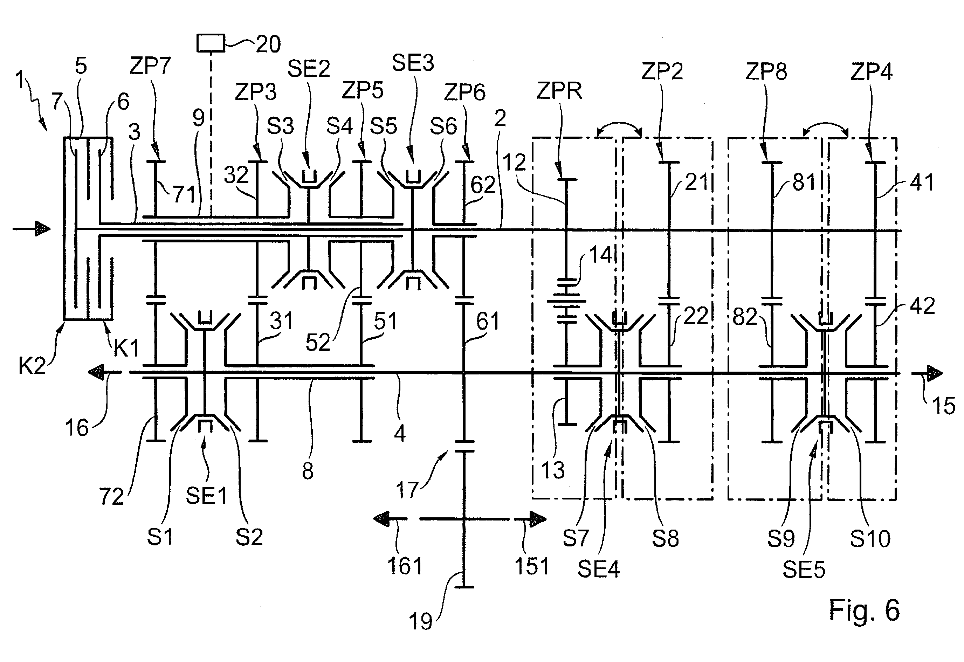

Bei einem in Fig. 6 gezeigten Ausführungsbeispiel des Doppelkupplungsgetriebes 1 ist der Abtrieb 151 und der weitere Abtrieb 161 ebenfalls mit einem Achsversatz zur Vorgelegewelle 4 und zur Getriebezentralwelle 2 angeordnet, wobei das Festrad des Abtriebskonstantenzahnradpaares 17 vorliegend das Festrad 61 der Zahnradstufe ZP6 ist, mit dem das Zahnrad 19 in Eingriff steht.

Alternativ besteht auch die Möglichkeit, ein zur Darstellung eines Achsversatzes zur Vorgelegewelle und/oder zur Getriebezentralwelle benötigtes Abtriebskonstantenzahnradpaar räumlich gesehen axial zwischen der Zahnradstufe ZP2 und der Zahnradstufe ZP8 anzuordnen.

Bei den in der Zeichnung gezeigten Ausführungsbeispielen ist das Doppelkupplungsgetriebe 1 zusätzlich mit zumindest einer elektrischen Maschine 20 ausgebildet. Die elektrische Maschine 20 ist in den Kraftfluss des Doppelkupplungsgetriebes 1 mechanisch zuschaltbar. Hierfür ist die elektrische Maschine 20 mit einer der Wellen des Radsatzes des Doppelkupplungsgetriebes 1 zu verbinden. Dabei besteht die Möglichkeit, zwischen der elektrischen Maschine 20 und dem Doppelkupplungsgetriebe 1 im Bereich eines Festrades oder eines Losrades des Radsatzes des Doppelkupplungsgetriebes 1 eine Wirkverbindung vorzusehen oder die elektrische Maschine 20 im Bereich eines zusätzlichen Festrades an den Radsatz anzubinden.

Eine vorteilhafte Wirkverbindung zwischen der elektrischen Maschine 20 und dem Kraftfluss des Doppelkupplungsgetriebes 1 liegt dann vor, wenn sowohl die Wirkverbindung zwischen der elektrischen Maschine 20 und den Lastschaltelementen K1 und K2 als auch zwischen der elektrischen Maschine 20 und dem Abtrieb 15 bzw. 16 oder 151 bzw. 161 in Abhängigkeit des jeweils vorliegenden Betriebszustandes des Fahrzeugantriebsstranges und der elektrischen Maschine schaltbar ist, da dann verschiedene Hybridfunktionen, wie ein Ladevorgang eines der elektrischen Maschine 20 zugeordneten elektrischen Speichers im Stillstand des Fahrzeuges oder ein rein elektrischer Fahrbetrieb, der dann während eines motorischen Betriebes der elektrischen Maschine 20 realisiert wird, darstellbar sind.

Eine Anbindung der elektrischen Maschine 20 an das Doppelkupplungsgetriebe 1 im Bereich der Zahnradstufen ZP7, ZP3 oder ZP5 ist unter Berücksichtigung der vorstehenden Ausführungen besonders geeignet.

Das erfindungsgemäße Doppelkupplungsgetriebe 1 ist vorliegend mit fünf paketierten Koppeleinrichtungen bzw. den fünf Schalteinrichtungen SE1 bis SE5 ausgeführt, die über lediglich fünf Aktoren betätigbar sind. Des Weiteren ist das Doppelkupplungsgetriebe 1 bauraumgünstig mit lediglich acht Radebenen ausgeführt, um mindestens neun Übersetzungen "1" bis "9" für Vorwärtsfahrt und zwei Übersetzungen "R1 ", "R2" für Rückwärtsfahrt darstellen zu können. Die sechste Übersetzung "6" ist als Direktgang ausführbar. Durch die Ausführung der ersten Übersetzung "1" und der neunten Übersetzung "9" für Vorwärtsfahrt als Windungsgänge weist das Doppelkupplungsgetriebe 1 eine reduzierte mechanische Spreizung und somit geringe Drehzahlverluste auf. Des Weiteren ist das Doppelkupplungsgetriebe 1 auch durch eine gute Lastschaltfähigkeit und durch eine gute Hybridisierfähigkeit gekennzeichnet.

Eine während der Darstellung der Windungsgänge "1" und "R1" aufgrund der gleichzeitig in den Kraftfluss zugeschalteten drei Zahnradstufen ZP3, ZP5, ZP2 oder ZP5, ZP3, ZP7 oder ZP3, ZP5, ZPR auftretende Beeinträchtigung des Gesamtwirkungsgrades des Doppelkupplungsgetriebes 1 ist vernachlässigbar, da diese Übersetzungen über die Lebensdauer und über den gesamten Verbrauchszyklus im Vergleich zu den weiteren Übersetzungen des Doppelkupplungsgetriebes 1 wesentlich geringere Fahranteile aufweisen. Dies gilt auch dann, falls der Abtrieb 15 bzw. 151 und/oder der weitere Abtrieb 16 bzw. 161 über das zusätzliche Abtriebskonstantenzahnradpaar 17 an die Vorgelegewelle 4 angebunden sind.

### Bezugszeichen

- 1: Doppelkupplungsgetriebe
- 2: Getriebezentralwelle
- 3: Getriebehohlwelle
- 4: Vorgelegewelle
- 5: Eingangselement der Lastschaltelemente
- 6: Ausgangselement eines Lastschaltelementes
- 7: Ausgangselement eines Lastschaltelementes
- 8: Hohlwelle
- 9: Hohlwelle
- 10: erstes Teilgetriebe
- 11: zweites Teilgetriebe
- 12: Zahnrad
- 13: Zahnrad
- 14: Zwischenrad
- 15, 151: Abtrieb
- 16, 161: weiterer Abtrieb
- 17: Abtriebskonstantenzahnradpaar
- 18: Zahnrad
- 19: Zahnrad
- 20: elektrische Maschine
- 21, 22: Zahnrad
- 31, 32: Zahnrad
- 42, 42: Zahnrad
- 51, 52: Zahnrad
- 61 62: Zahnrad
- 71, 72: Zahnrad
- 81, 82: Zahnrad
- L1, L2: Linie
- K1, K2: Lastschaltelement
- SE1 bis SE5: Schalteinrichtung
- S1 bis S10: Schaltelement
- ZP2 bis ZPR: Zahnradstufe

- "1" bis "9": Übersetzung für Vorwärtsfahrt
- "R1 ", "R2": Übersetzung für Rückwärtsfahrt

## Patentansprüche

1. Doppelkupplungsgetriebe (1) in Vorgelegebauweise, mit einer Getriebezentralwelle (2), mit einer konzentrisch dazu angeordneten Getriebehohlwelle (3), mit genau einer Vorgelegewelle (4) und mit zwei Lastschaltelementen (K1, K2),
wobei beide Lastschaltelemente (K1, K2) eingangsseitig mit einem Antriebsaggregat in Wirkverbindung bringbar sind,
wobei eines der beiden Lastschaltelemente (K1) ausgangsseitig mit der Getriebezentralwelle (2) verbunden ist,
wobei das andere der beiden Lastschaltelemente (K2) ausgangsseitig mit der Getriebehohlwelle (3) verbunden ist,
wobei die Getriebezentralwelle (2) und die Getriebehohlwelle (3) zur Darstellung einer Übersetzung ("1" bis "R2") über Zahnradstufen (ZP2 bis ZPR), die über Schalteinrichtungen (SE1 bis SE5) in den Kraftfluss zu- und abschaltbar sind, mit der Vorgelegewelle (4) verbindbar sind,
und wobei mehreren Schalteinrichtungen (SE1 bis SE5) jeweils zwei Zahnradstufen ((ZP7, ZP3), (ZP3, ZP5), (ZP5, ZP6), (ZPR, ZP2), ZP8, ZP4)) zugeordnet sind,
**dadurch gekennzeichnet, dass** wenigstens neun Übersetzungen ("1" bis "9") für Vorwärtsfahrt darstellbar sind und auf der Vorgelegewelle (4) eine dazu koaxial angeordnete Hohlwelle (8) vorgesehen ist, die über eine der Schalteinrichtungen (SE1) drehfest mit der Vorgelegewelle (4) koppelbar ist und mit der wenigstens zwei Zahnräder (31, 51) der Zahnradstufen (ZP3, ZP5) drehfest verbunden sind,
und dass auf der Getriebezentralwelle (2) oder der Getriebehohlwelle (3) eine dazu koaxial angeordnete weitere Hohlwelle (9) vorgesehen ist, die über eine der Schalteinrichtungen (SE2) mit der Getriebezentralwelle (2) oder der Getriebehohlwelle (3) verbindbar ist und mit der wenigstens zwei weitere Zahnräder (32, 71) der Zahnradstufen (ZP3, ZP7) drehfest verbunden sind,
wobei wenigstens drei Übersetzungen ("1", "9", "R1") durch schaltelementseitiges Zuschalten über zugeordnete Schaltelemente ((S3, S5, S8), (S1, S4), (S3, S5, S7)) der Schalteinrichtungen ((SE2, SE3, SE4), (SE1, SE2), (SE2, SE3, SE4)) und das jeweils zugeordnete Lästschaltelement (K1) von jeweils drei der Zahnradstufen ((ZP3, ZP5, ZP2), (ZP5, ZP3, ZP7), (ZP3, ZP5, ZPR)) in den Kraftfluss darstellbar sind, über die durch jeweils alleiniges schaltelementseitiges Zuschalten über zugeordnete Schaltelemente ((S8), (S2, S3), (S2, S4), (S1, S3), (S3, S5, S7)) der Schalteinrichtungen ((SE4), (SE1, SE2), (SE1, SE2), (SE1, SE2), (SE2, SE3, SE4)) und das jeweils zugeordnete Lastschaltelement ((K2), (K1), (K1), (K1), (K1)) in den Kraftfluss jeweils eine Übersetzung ("2", "3", "5", "7", "R2") darstellbar ist.

2. Doppelkupplungsgetriebe nach Anspruch 1, **dadurch gekennzeichnet, dass** zwei der zur Darstellung der drei Übersetzungen ("1", "9", "R1") in den Kraftfluss zuzuschaltenden drei Zahnradstufen ((ZP3, ZP5, ZP2) oder (ZP3, ZP5, ZP7) oder (ZP3, ZP5, ZPR)) jeweils identisch sind und die jeweils dritte Zahnradpaarung (ZP2 oder ZP7 oder ZPR) variiert.

3. Doppelkupplungsgetriebe nach Anspruch 1 oder 2, **dadurch gekennzeichnet, dass** jeweils vier der Zahnradstufen (ZPR, ZP2, ZP8, ZP4) mittels Schalteinrichtungen (SE4, SE5) mit der Vorgelegewelle (4) in Wirkverbindung bringbar sind.

4. Doppelkupplungsgetriebe nach Anspruch 1, 2 oder 3, **dadurch gekennzeichnet, dass** eine der Zahnradstufen (ZP6), über die vorzugsweise eine sechste Übersetzung ("6") für Vorwärtsfahrt darstellbar ist, über eine der Schalteinrichtungen (SE3) mit der Getriebezentralwelle (2) oder der Getriebehohlwelle (3) koppelbar ist.

5. Doppelkupplungsgetriebe nach einem der Ansprüche 1 bis 4, **dadurch gekennzeichnet, dass** eine der Zahnradstufen (ZP5), über die vorzugsweise eine fünfte Übersetzungsstufe ("5") für Vorwärtsfahrt darstellbar ist, über eine der Schalteinrichtungen (SE3) mit der Getriebezentralwelle (2), über eine vorzugsweise weitere Schalteinrichtung (SE3) mit der Getriebehohlwelle (3) und über eine zusätzliche Schalteinrichtung (SE1) der Schalteinrichtungen (SE1 bis SE5) mit der Vorgelegewelle (4) koppelbar ist.

6. Doppelkupplungsgetriebe nach einem der Ansprüche 1 bis 5, **dadurch gekennzeichnet, dass** eine der Zahnradstufen (ZP3), über die vorzugsweise eine dritte Übersetzungsstufe ("3") für Vorwärtsfahrt darstellbar ist, und eine weitere Zahnradstufe (ZP7), über die vorzugsweise eine siebte Übersetzungsstufe ("7") für Vorwärtsfahrt darstellbar ist, über Schalteinrichtungen (SE1, SE2) mit der Getriebezentralwelle (2) oder der Getriebehohlwelle (3) sowie mit der Vorgelegewelle (4) koppelbar sind.

7. Doppelkupplungsgetriebe nach einem der Ansprüche 1 bis 6, **dadurch gekennzeichnet, dass** ein Teil der Zahnradstufen (ZP3, ZP5, ZP7) einem ersten Teilgetriebe (10) und ein weiterer Teil der Zahnradstufen (ZP2, ZP4, ZP5, ZP6, ZP8, ZPR) einem zweiten Teilgetriebe (11) zugeordnet sind,
wobei die dem ersten Teilgetriebe (10) zugeordneten Zahnradstufen (ZP3, ZP7) zwischen den Zahnradstufen (ZP2, ZP4, ZP6, ZP8, ZPR) des zweiten Teilgetriebes (11) und den Lastschaltelementen (K1, K2) oder die Zahnradstufen (ZP2, ZP4, ZP6, ZP8, ZPR) des zweiten Teilgetriebes (11) zwischen den Zahnradstufen (ZP3, ZP7) des ersten Teilgetriebes (10) und den Lastschaltelementen (K1, K2) anordenbar sind.

8. Doppelkupplungsgetriebe nach einem der Ansprüche 5 bis 7, **dadurch gekennzeichnet, dass** die Zahnradstufe (ZP5), die mit der Getriebezentralwelle (2), mit der Getriebehohlwelle (3) und mit der Vorgelegewelle (4) koppelbar ist, durch schaltelementseitiges in den Kraftfluss Schalten entweder dem ersten Teilgetriebe (10) oder dem zweiten Teilgetriebe (11) zugeordnet ist.

9. Doppelkupplungsgetriebe nach Anspruch 7 oder 8, **dadurch gekennzeichnet, dass** wenigstens zwei Zahnradstufen (ZP8, ZP4) des zweiten Teilgetriebes (11) über eine gemeinsame Schalteinrichtung (SE5) in den Kraftfluss zuschaltbar sind,
wobei eine der beiden Zahnradstufen (ZP4 oder ZP8) in axialer Erstreckung der Getriebezentralwelle (2) in Bezug auf die zugeordnete Schalteinrichtung (SE5) auf einer den Lastschaltelementen (K1, K2) zugewandten Seite der Schalteinrichtung (SE5) und die andere Zahnradstufe (ZP8 oder ZP4) auf einer den Lastschaltelementen (K1, K2) abgewandten Seite der Schalteinrichtung (SE5) angeordnet ist.

10. Doppelkupplungsgetriebe nach einem der Ansprüche 7 bis 9,
**dadurch gekennzeichnet, dass** wenigstens zwei weitere Zahnradstufen (ZPR, ZP2) des zweiten Teilgetriebes (11) über eine gemeinsame Schalteinrichtung (SE4) in den Kraftfluss zuschaltbar sind, wobei eine der beiden Zahnradstufen (ZPR oder ZP2) in axialer Erstreckung der Getriebezentralwelle (2) in Bezug auf die zugeordnete Schalteinrichtung (SE4) auf einer den Lastschaltelementen (K1, K2) zugewandten Seite der Schalteinrichtung (SE4) und die andere Zahnradstufe (ZP2 oder ZPR) auf einer den Lastschaltelementen (K1, K2) abgewandten Seite der Schalteinrichtung (SE4) angeordnet ist.

11. Doppelkupplungsgetriebe nach Anspruch 10, **dadurch gekennzeichnet, dass** die wenigstens zwei Zahnradstufen (ZP8, ZP4) des zweiten Teilgetriebes (11) in axialer Erstreckung der Getriebezentralwelle (2) zwischen den Lastschaltelementen (K1, K2) und den wenigstens zwei weiteren Zahnradstufen (ZPR, ZP2) des zweiten Teilgetriebes (11) oder die wenigstens zwei weiteren Zahnradstufen (ZPR, ZP2) des zweiten Teilgetriebes (11) in axialer Erstreckung der Getriebezentralwelle (2) zwischen den Lastschaltelementen (K1, K2) und den wenigstens zwei Zahnradstufen (ZP8, ZP4) des zweiten Teilgetriebes (11) anordenbar sind.

12. Doppelkupplungsgetriebe nach einem der Ansprüche 5 bis 11,
**dadurch gekennzeichnet, dass** eine zusätzliche Zahnradstufe (ZP6) des zweiten Teilgetriebes (11) und die Zahnradstufe (ZP5), die mit der Getriebezentralwelle (2), mit der Getriebehohlwelle (3) und mit der Vorgelegewelle (4) koppelbar ist, jeweils über eine gemeinsame Schalteinrichtung (SE3) in den Kraftfluss zuschaltbar sind.

13. Doppelkupplungsgetriebe nach Anspruch 12, **dadurch gekennzeichnet, dass** die zusätzliche Zahnradstufe (ZP6) des zweiten Teilgetriebes (11) und eine Zahnradstufe (ZP4 oder ZP8) der wenigstens zwei Zahnradstufen (ZP4, ZP8) des zweiten Teilgetriebes (11) über eine gemeinsame Schalteinrichtung (SE5) in den Kraftfluss zuschaltbar sind, während eine weitere Zahnradstufe (ZP8 oder ZP4) der wenigstens zwei Zahnradstufen (ZP4, ZP8) des zweiten Teilgetriebes (11) und die Zahnradstufe (ZP5), die mit der Getriebezentralwelle (2), der Getriebehohlwelle (3) und mit der Vorgelegewelle (4) koppelbar ist, jeweils über eine gemeinsame Schalteinrichtung (SE3) in den Kraftfluss zuschaltbar sind.

14. Doppelkupplungsgetriebe nach einem der Ansprüche 9 bis 13,
**dadurch gekennzeichnet, dass** Losräder (42, 82) der wenigstens zwei Zahnradstufen (ZP4, ZP8) des zweiten Teilgetriebes (11) auf der Getriebezentralwelle (2), der Getriebehohlwelle (3) und/oder auf der Vorgelegewelle (4) angeordnet und über Schalteinrichtungen (SE3 oder SE5) mit diesen jeweils koppelbar sind.

15. Doppelkupplungsgetriebe nach einem der Ansprüche 10 bis 14,
**dadurch gekennzeichnet, dass** Losräder (13, 22) der wenigstens zwei weiteren Zahnradstufen (ZPR, ZP2) des zweiten Teilgetriebes (11) auf der Getriebezentralwelle (2), der Getriebehohlwelle (3) und/oder auf der Vorgelegewelle (4) angeordnet und über die gemeinsame Schalteinrichtung (SE4) mit diesen jeweils koppelbar sind.

16. Doppelkupplungsgetriebe nach einem der Ansprüche 1 bis 15,
**dadurch gekennzeichnet, dass** wenigstens ein Teil des Abtriebs (15, 16) des Doppelkupplungsgetriebes (1) koaxial zur Vorgelegewelle (4) vorgesehen ist.

17. Doppelkupplungsgetriebe nach einem der Ansprüche 1 bis 16,
**dadurch gekennzeichnet, dass** wenigstens ein Teil des Abtriebs (15) des Doppelkupplungsgetriebes (1) koaxial zur Getriebezentralwelle (2) vorgesehen ist.

18. Doppelkupplungsgetriebe nach einem der Ansprüche 1 bis 17,
**dadurch gekennzeichnet, dass** wenigstens ein Teil des Abtriebs (15, 16) des Doppelkupplungsgetriebes (1) achsversetzt zur Vorgelegewelle (4) und zur Getriebezentralwelle (2) vorgesehen ist, wobei der Achsversatz zwischen dem Abtrieb (151, 161) des Doppelkupplungsgetriebes (1) und der Vorgelegewelle (4) über eine weitere Zahnradstufe (17) realisiert ist und die weitere Zahnradstufe (17) ein auf der Vorgelegewelle angeordnetes Festrad (18; 61) umfasst, das vorzugsweise ein Festrad (61) einer zur Darstellung einer Übersetzung ("6") vorgesehenen Zahnradstufe (ZP6) oder ein weiteres Festrad (18) ist.

19. Doppelkupplungsgetriebe nach einem der Ansprüche 1 bis 18,
**dadurch gekennzeichnet, dass** genau fünf Schalteinrichtungen ((S1, S2), (S3, S4), (S5, S6), (S7, S8), (S9, S10)) vorgesehen sind, über die jeweils zwei Zahnradstufen ((ZP7, ZP3), (ZP3, ZP5), (ZP5, ZP6), (ZPR, ZP2), (ZP8, ZP4)) in den Kraftfluss zuschaltbar sind.

20. Doppelkupplungsgetriebe nach einem der Ansprüche 1 bis 19,
**dadurch gekennzeichnet, dass** genau acht Radebenen (ZP2, ZP3, ZP4, ZP5, ZP6, ZP7, ZP8, ZPR) vorgesehen sind, die jeweils Stirnradstufen mit diskreten Übersetzungen ("2", "3", "4", "5", "6", "7", "8", "R2") umfassen.

21. Doppelkupplungsgetriebe nach einem der Ansprüche 1 bis 20,
**dadurch gekennzeichnet, dass** wenigstens zwei Übersetzungen ("R1", "R2") für Rückwärtsfahrt darstellbar sind.

22. Doppelkupplungsgetriebe nach einem der Ansprüche 1 bis 21,
**dadurch gekennzeichnet, dass** eine in den Kraftfluss des Doppelkupplungsgetriebes (1) zuschaltbare elektrische Maschine (20) vorgesehen ist.

## Claims

1. Dual clutch transmission (1) of the countershaft type, with a transmission central shaft (2), with a transmission hollow shaft (3) arranged concentrically thereto, with exactly one countershaft (4) and with two power shift elements (K1, K2),
the two power shift elements (K1, K2) being operatively connectable on the input side to a drive assembly,
one of the two power shift elements (K1) being connected on the output side to the transmission central shaft (2),
the other of the two power shift elements (K2) being connected on the output side to the transmission hollow shaft (3),
the transmission central shaft (2) and the transmission hollow shaft (3) being connectable to the countershaft (4) in order to generate a step-up ("1" to "R2") via gearwheel stages (ZP2 to ZPR) which can be cut into and cut out of the force flux via shift devices (SE1 to SE5),
and a plurality of shift devices (SE1 to SE5) being assigned in each case two gearwheel stages ((ZP7, ZP3), (ZP23, ZP5)), (ZP25, ZP6), (ZPR, ZP2), (ZP8, ZP4)), **characterized in that** at least nine step-ups ("1" to "9") for forward travel can be generated, and a countershaft (4) has provided on it a hollow shaft (8) which is arranged coaxially thereto and which can be coupled fixedly into rotation to the countershaft (4) via one of the shift devices (SE1) and to which at least two gearwheels (31, 51) of the gearwheel stages (ZP3, ZP5) are connected fixedly into rotation,
and **in that**, on the transmission central shaft (2) or the transmission hollow shaft (3), a further hollow shaft (9) is provided, which is arranged coaxially thereto and which is connectable to the transmission central shaft (2) or the transmission hollow shaft (3) via one of the shift devices (SE2) and to which at least two further gearwheels (32, 71) of the gearwheel stages (ZP3, ZP7) are connected fixedly into rotation, at least three step-ups ("1", "9", "R1") being capable of being generated as a result of shift-element-side cut-in into the force flux via assigned shift elements ((S3, S5, S8), (S1, S4), (S3, S5, S7)) of the shift devices ((SE2, SE3, SE4), (SE1, SE2), (SE2, SE3, SE4)) and in this case assigned power shift element (K1) of in each case three of the gearwheel stages ((ZP3, ZP5, ZP2), (ZP5, ZP3, ZP7), (ZP3, ZP5, ZPR)), via which a step-up ("2", "3", "5", "7", "R2") can be generated in each case as a result of the in each case sole shift-element-side cut-in into the force flux via assigned shift elements ((S8), (S2, S3), (S2, S4), (S1, S3), (S3, S5, S7)) of the shift devices ((SE4), (SE1, SE2), (SE1, SE2), (SE1, SE2), (SE2, SE3, SE4)) and in each case assigned power shift element ((K2), (K1), (K1), K2), (K1)).

2. Dual clutch transmission according to Claim 1, **characterized in that** two of the three gearwheel stages ((ZP3, ZP5, ZP2) or (ZP23, ZP5, ZP7) or (ZP23, ZP5, ZPR)) to be cut into the force flux in order to generate the three step-ups ("1", "9", "R1") are in each case identical and the in each case third gearwheel pairing (ZP2, ZP7 or ZPR) varies.

3. Dual clutch transmission according to Claim 1 or 2, **characterized in that** in each case four of the gearwheel stages (ZPR, ZP2, ZP8, ZP4) can be operatively connected to the countershaft (4) by means of shift devices (SE4, SE5).

4. Dual clutch transmission according to Claim 1, 2 or 3, **characterized in that** one of the gearwheel stages (ZP6), via which preferably a sixth step-up ("6") for forward travel can be generated, can be coupled to the transmission central shaft (2) or the transmission hollow shaft (3) via one of the shift devices (SE3).

5. Dual clutch transmission according to one of Claims 1 to 4, **characterized in that** one of the gearwheel stages (ZP5), via which preferably a fifth step-up stage ("5") for forward travel can be generated, can be coupled to the transmission central shaft (2) via one of the shift devices (SE3), to the transmission hollow shaft (3) via a preferably further shift device (SE3) and to the countershaft (4) via an additional shift device (SE1) of the shift devices (SE1 to SE5).

6. Dual clutch transmission according to one of Claims 1 to 5, **characterized in that** one of the gearwheel stages (ZP3), via which preferably a third step-up stage ("3") for forward travel can be generated, and a further gearwheel stage (ZP7), via which preferably a seventh step-up stage ("7") for forward travel can be generated, can be coupled to the transmission central shaft (2) or the transmission hollow shaft (3) and also to the countershaft (4) via shift devices (SE1, SE2).

7. Dual clutch transmission according to one of Claims 1 to 6, **characterized in that** part of the gearwheel stages (ZP3, ZP5, ZP7) is assigned to a first part-transmission (10) and a further part of the gearwheel stages (ZP2, ZP4, ZP5, ZP6, ZP8, ZPR) is assigned to a second part-transmission (11),
the gearwheel stages (ZP3, ZP7) assigned to the first part-transmission (10) being capable of being arranged between the gearwheel stages (ZP2, ZP4, ZP6, ZP8, ZPR) of the second part-transmission (11) and the power shift elements (K1, K2), or the gearwheel stages (ZP2, ZP4, ZP6, ZP8, ZPR) of the second part-transmission (11) being capable of being arranged between the gearwheel stages (ZP3, ZP7) of the first part-transmission (10) and the power shift elements (K1, K2).

8. Dual clutch transmission according to one of Claims 5 to 7, **characterized in that** the gearwheel stage (ZP5) which can be coupled to the transmission central shaft (2), to the transmission hollow shaft (3) and to the countershaft (4) is assigned either to the first part-transmission (10) or to the second part-transmission (11) as a result of the shift-element-side cutting into the force flux.

9. Dual clutch transmission according to Claim 7 or 8, **characterized in that** at least two gearwheel stages (ZP8, ZP4) of the second part-transmission (11) can be cut into the force flux via a common shift device (SE5), along the axial extent of the transmission central shaft (2), one of the two gearwheel stages (ZP4 or ZP8) is arranged, with respect to the assigned shift device (SE5), on a side of the shift device (SE5) which faces the power shift elements (K1, K2) and the other gearwheel stage (ZP8 or ZP4) is arranged on a side of the shift device (SE5) which faces away from the power shift elements (K1, K2).

10. Dual clutch transmission according to one of Claims 7 to 9, **characterized in that** at least two further gearwheel stages (ZPR, ZP2) of the second part-transmission (11) can be cut into the force flux via a common shift device (SE4), and, along the axial extent of the transmission central shaft (2), one of the two gearwheel stages (ZPR or ZP2) is arranged, with respect to the assigned shift device (SE4), on a side of the shift device (SE4) which faces the power shift elements (K1, K2) and the other gearwheel stage (ZP2 or ZPR) is arranged on a side of the shift device (SE4) which faces away from the power shift elements (K1, K2).

11. Dual clutch transmission according to Claim 10, **characterized in that**, along the axial extent of the transmission central shaft (2), the at least two gearwheel stages (ZP8, ZP4) of the second part-transmission (11) are arranged between the power shift elements (K1, K2) and the at least two further gearwheel stages (ZPR, ZP2) of the second part-transmission (11) or, along the axial extent of the transmission central shaft (2), the at least two further gearwheel stages (ZPR, ZP2) of the second part-transmission (11) can be arranged between the power shift elements (K1, K2) and the at least two gearwheel stages (ZP8, ZP4) of the second part-transmission (11).

12. Dual clutch transmission according to one of Claims 5 to 11, **characterized in that** an additional gearwheel stage (ZP6) of the second part-transmission (11) and the gearwheel stage (ZP5) which can be coupled to the transmission central shaft (2), to the transmission hollow shaft (3) and to the countershaft (4) can be cut into the force flux in each case via a common shift device (SE3).

13. Dual clutch transmission according to Claim 12, **characterized in that** the additional gearwheel stage (ZP6) of the second part-transmission (11) and a gearwheel stage (ZP4 or ZP8) of the at least two gearwheel stages (ZP4, ZP8) of the second part-transmission (11) can be cut into the force flux via a common shift device (SE5), while a further gearwheel stage (ZP8, or ZP4) of the at least two gearwheel stages (ZP4, ZP8) of the second part-transmission (11) and the gearwheel stage (ZP5) which can be coupled to the transmission central shaft (2), to the transmission hollow shaft (3) and to the countershaft (4) can be cut into the force flux in each case via a common shift device (SE3).

14. Dual clutch transmission according to one of Claims 9 to 13, **characterized in that** loose wheels (42, 82) of the at least two gearwheel stages (ZP4, ZP8) of the second part-transmission (11) are arranged on the transmission central shaft (2), on the transmission hollow shaft (3) and/or on the countershaft (4) and can be coupled in each case to these via shift devices (SE3 or SE5).

15. Dual clutch transmission according to one of Claims 10 to 14, **characterized in that** loose wheels (13, 22) of the at least two further gearwheel stages (ZPR, ZP2) of the second part-transmission (11) are arranged on the transmission central shaft (2), on the transmission hollow shaft (3) and/or on the countershaft (4) and can be coupled in each case to these via the common shift device (SE4).

16. Dual clutch transmission according to one of Claims 1 to 15, **characterized in that** at least part of the output (15, 16) of the dual clutch transmission (1) is provided coaxially to the countershaft (4).

17. Dual clutch transmission according to one of Claims 1 to 16, **characterized in that** at least part of the output (15) of the dual clutch transmission (1) is provided coaxially to the transmission central shaft (2).

18. Dual clutch transmission according to one of Claims 1 to 17, **characterized in that** at least part of the output (15, 16) of the dual clutch transmission (1) is provided so as to be offset axially to the countershaft (4) and to the transmission central shaft (2), the axial offset between the output (151, 161) of the dual clutch transmission (1) and the countershaft (4) being implemented via a further gearwheel stage (17), and the further gearwheel stage (17) comprising a fixed wheel (18; 61) which is arranged on the countershaft and which is preferably a fixed wheel (61) of a gearwheel stage (ZP6) provided for generating a step-up ("6") or is a further fixed wheel (18).

19. Dual clutch transmission according to one of Claims 1 to 18, **characterized in that** exactly five shift devices ((S1, S2), (S3, S4), (S5, S6), (S7, S8), (S9, S10)) are provided, via which in each case two gearwheel stages ((ZP7, ZP3), (ZP3, ZP5), (ZP5, ZP6), (ZPR, ZP2), (ZP8, ZP4)) can be cut into the force flux.

20. Dual clutch transmission according to one of Claims 1 to 19, **characterized in that** exactly eight wheel planes (ZP2, ZP3, ZP4, ZP5, ZP6, ZP7, ZP8, ZPR) are provided, which in each case comprise spur wheel stages with discrete step-ups ("2", "3", "4", "5", "6", "7", "8", "R2").

21. Dual clutch transmission according to one of Claims 1 to 20, **characterized in that** at least two step-ups ("R1", "R2") for reverse travel can be generated.

22. Dual clutch transmission according to one of Claims 1 to 21, **characterized in that** an electrical machine (20) which can be cut into the force flux of the dual clutch transmission (1) is provided.

## Revendications

1. Transmission à double embrayage (1) à construction à arbre secondaire, comprenant un arbre de transmission central (2), un arbre creux de transmission (3) disposé concentriquement par rapport à celui-ci, exactement un arbre secondaire (4) et deux éléments de commutation de charge (K1, K2),
les deux éléments de commutation de charge (K1, K2) pouvant être amenés en liaison fonctionnelle avec un groupe motopropulseur du côté de l'entrée, l'un des deux éléments de commutation de charge (K1) étant connecté du côté de la sortie à l'arbre de transmission central (2),
l'autre des deux éléments de commutation de charge (K2) étant connecté du côté de la sortie à l'arbre creux de transmission (3),
l'arbre de transmission central (2) et l'arbre creux de transmission (3) pouvant être connectés à l'arbre secondaire (4) pour réaliser un rapport de démultiplication ("1" à "R2") par le biais d'étages de pignons d'engrenages (ZP2 à ZPR) qui peuvent être connectés et déconnectés dans le flux de forces par le biais de dispositifs de commutation (SE1 à SE5),
et à plusieurs dispositifs de commutation (SE1 à SE5) étant à chaque fois associés deux étages de pignons d'engrenages ((ZP7, ZP3), (ZP3, ZP5), (ZP5, ZP6), (ZPR, ZP2), (ZP8, ZP4)),
**caractérisée en ce qu'**au moins neuf rapports de démultiplication ("1" à "9") pour la conduite en marche avant peuvent être réalisés et un arbre creux (8) est prévu sur l'arbre secondaire (4) coaxialement par rapport à celui-ci, lequel peut être accouplé de manière solidaire en rotation à l'arbre secondaire (4) par le biais de l'un des dispositifs de commutation (SE1), et avec lequel au moins deux pignons d'engrenages (31, 51) des étages de pignons d'engrenages (ZP3, ZP5) sont connectés de manière solidaire en rotation,
et **en ce qu'**un arbre creux supplémentaire (9) est prévu sur l'arbre de transmission central (2) ou l'arbre creux de transmission (3) coaxialement à ceux-ci, lequel arbre creux peut être connecté par le biais de l'un des dispositifs de commutation (SE2) à l'arbre de transmission central (2) ou à l'arbre creux de transmission (3) et avec lequel au moins deux pignons d'engrenages supplémentaires (32, 71) des étages de pignons d'engrenages (ZP3, ZP7) peuvent être connectés de manière solidaire en rotation,
au moins trois rapports de démultiplication ("1", "9", "R1") pouvant être réalisés par connexion du côté de l'élément de commutation par le biais d'éléments de commutation associés ((S3, S5, S8), (S1, S4), (S3, S5, S7)) des dispositifs de commutation ((SE2, SE3, SE4), (SE1, SE2), (SE2, SE3, SE4)) et de l'élément de commutation de charge respectivement associé (K1) de trois étages respectifs des étages de pignons d'engrenage ((ZP3, ZP5, ZP2), (ZP5, ZP3, ZP7), (ZP3, ZP5, ZPR)) dans le flux de forces, par le biais desquels, par une connexion unique du côté de l'élément de commutation par le biais d'éléments de commutation associés ((S8), (S2, S3), (S2, S4), (S1, S3), (S3, S5, S7)) des dispositifs de commutation ((SE4), (SE1, SE2), (SE1, SE2), (SE1, SE2), (SE2, SE3, SE4)) et de l'élément de commutation de charge respectivement associé ((K2), (K1), (K1), (K1), (K1)), un rapport de démultiplication ("2", "3", "5", "7", "R2") peut être réalisé respectivement dans le flux de forces.

2. Transmission à double embrayage selon la revendication 1, **caractérisée en ce que** deux des trois étages de pignons d'engrenages ((ZP2, ZP5, ZP2) ou (ZP3, ZP5, ZP7) ou (ZP3, ZPP5, ZPR)) devant être connectés dans le flux de forces pour réaliser les trois rapports de démultiplication ("1", "9", "R1") sont à chaque fois identiques et le troisième appartement de pignons d'engrenages (ZP2 ou ZP7 ou ZPR) varie à chaque fois.

3. Transmission à double embrayage selon la revendication 1 ou 2, **caractérisée en ce qu'**à chaque fois quatre des étages de pignons d'engrenages (ZPR, ZP2, ZP8, ZP4) peuvent être amenés en liaison fonctionnelle avec l'arbre secondaire (4) au moyen de dispositifs de commutation (SE4, SE5).

4. Transmission à double embrayage selon la revendication 1, 2 ou 3, **caractérisée en ce que** l'un des étages de pignons d'engrenages (ZP6), par le biais duquel de préférence un sixième rapport de démultiplication ("6") peut être réalisé pour la conduite en marche avant, peut être accouplé par le biais de l'un des dispositifs de commutation (SE3) à l'arbre de transmission central (2) ou à l'arbre creux de transmission (3).

5. Transmission à double embrayage selon l'une quelconque des revendications 1 à 4, **caractérisée en ce que** l'un des étages de pignons d'engrenages (ZP5), par le biais duquel de préférence un cinquième rapport de démultiplication ("5") peut être réalisé pour la conduite en marche avant, peut être accouplé, par le biais de l'un des dispositifs de commutation (SE3) à l'arbre de transmission central (2), par le biais d'un dispositif de commutation de préférence supplémentaire (SE3) à l'arbre creux de transmission (3) et par le biais d'un dispositif de commutation supplémentaire (SE1) des dispositifs de commutation (SE1 à SE5) à l'arbre secondaire (4).

6. Transmission à double embrayage selon l'une quelconque des revendications 1 à 5, **caractérisée en ce que** l'un des étages de pignons d'engrenages (ZP3), par le biais duquel de préférence un troisième étage de rapport de démultiplication ("3") peut être réalisé pour la conduite en marche avant, et un étage de pignon d'engrenage supplémentaire (ZP7), par le biais duquel de préférence un septième étage de rapport de démultiplication ("7") peut être réalisé pour la conduite en marche avant, peuvent être accouplés par le biais de dispositifs de commutation (SE1, SE2) à l'arbre de transmission central (2) ou à l'arbre creux de transmission (3) ainsi qu'à l'arbre secondaire (4).

7. Transmission à double embrayage selon l'une quelconque des revendications 1 à 6, **caractérisée en ce qu'**une partie des étages de pignons d'engrenages (ZP3, ZP5, ZP7) est associée à une première transmission partielle (10) et une autre partie des étages de pignons d'engrenages (ZP2, ZP4, ZP5, ZP6, ZP8, ZPR) est associée à une deuxième transmission partielle (11),
les étages de pignons d'engrenages (ZP3, ZP7) associés à la première transmission partielle (10) pouvant être disposés entre les étages de pignons d'engrenages (ZP2, ZP4, ZP6, ZP8, ZPR) de la deuxième transmission partielle (11) et les éléments de commutation de charge (K1, K2) ou les étages de pignons d'engrenages (ZP2, ZP4, ZP6, ZP8, ZPR) de la deuxième transmission partielle (11) pouvant être disposés entre les étages de pignons d'engrenages (ZP3, ZP7) de la première transmission partielle (10) et les éléments de commutation de charge (K1, K2).

8. Transmission à double embrayage selon l'une quelconque des revendications 5 à 7, **caractérisée en ce que** l'étage de pignon d'engrenage (ZP5), qui peut être accouplé avec l'arbre de transmission central (2), avec l'arbre creux de transmission (3) et avec l'arbre secondaire (4), est associé par commutation du côté de l'élément de commutation dans le flux de forces soit à la première transmission partielle (10) soit à la deuxième transmission partielle (11).

9. Transmission à double embrayage selon la revendication 7 ou 8, **caractérisée en ce qu'**au moins deux étages de pignons d'engrenages (ZP8, ZP4) de la deuxième transmission partielle (11) peuvent être connectés dans le flux de forces par le biais d'un dispositif de commutation commun (SE5),
l'un des deux étages de pignons d'engrenages (ZP4 ou ZP8), dans l'étendue axiale de l'arbre de transmission central (2) par rapport au dispositif de commutation associé (SE5), étant disposé sur un côté du dispositif de commutation (SE5) tourné vers les éléments de commutation de charge (K1, K2) et l'autre étage de pignon d'engrenage (ZP8 ou ZP4) étant disposé sur un côté du dispositif de commutation (SE5) opposé aux éléments de commutation de charge (K1, K2).

10. Transmission à double embrayage selon l'une quelconque des revendications 7 à 9, **caractérisée en ce qu'**au moins deux étages de pignons d'engrenages supplémentaires (ZPR, ZP2) de la deuxième transmission partielle (11) peuvent être connectés dans le flux de forces par le biais d'un dispositif de commutation commun (SE4), l'un des deux étages de pignons d'engrenages (ZPR ou ZP2), dans l'étendue axiale de l'arbre de transmission central (2) par rapport au dispositif de commutation associé (SE4), étant disposé sur un côté du dispositif de commutation (SE4) tourné vers les éléments de commutation de charge (K1, K2) et l'autre étage de pignon d'engrenage (ZP2 ou ZPR) étant disposé sur un côté du dispositif de commutation (SE4) opposé aux éléments de commutation de charge (K1, K2).

11. Transmission à double embrayage selon la revendication 10, **caractérisée en ce que** les au moins deux étages de pignons d'engrenages (ZP8, ZP4) de la deuxième transmission partielle (11), dans l'étendue axiale de l'arbre de transmission central (2), peuvent être disposés entre les éléments de commutation de charge (K1, K2) et les au moins deux autres étages de pignons d'engrenages (ZPR, ZP2) de la deuxième transmission partielle (11) ou les au moins deux autres étages de pignons d'engrenages (ZPR, ZP2) de la deuxième transmission partielle (11), dans l'étendue axiale de l'arbre de transmission central (2), peuvent être disposés entre les éléments de commutation de charge (K1, 2K) et les au moins deux étages de pignons d'engrenages (ZP8, ZP4) de la deuxième transmission partielle (11).

12. Transmission à double embrayage selon l'une quelconque des revendications 5 à 11, **caractérisée en ce qu'**un étage de pignon d'engrenage supplémentaire (ZP6) de la deuxième transmission partielle (11) et l'étage de pignon d'engrenage (ZP5), qui peut être accouplé à l'arbre de transmission central (2), à l'arbre creux de transmission (3) et à l'arbre secondaire (4), peuvent à chaque fois être connectés dans le flux de forces par le biais d'un dispositif de commutation commun (SE3).

13. Transmission à double embrayage selon la revendication 12, **caractérisée en ce que** l'étage de pignon d'engrenage supplémentaire (ZP6) de la deuxième transmission partielle (11) et un étage de pignon d'engrenage (ZP4 ou ZP8) des au moins deux étages de pignons d'engrenages (ZP4, ZP8) de la deuxième transmission partielle (11) peuvent être connectés dans le flux de forces par le biais d'un dispositif de commutation commun (SE5), tandis qu'un étage de pignon d'engrenage supplémentaire (ZP8 ou ZP4) des au moins deux étages de pignons d'engrenages (ZP4, ZP8) de la deuxième transmission partielle (11) et l'étage de pignon d'engrenage (ZP5), qui peut être accouplé à l'arbre de transmission central (2), à l'arbre creux de transmission (3) et à l'arbre secondaire (4), peuvent être connectés dans le flux de forces à chaque fois par le biais d'un dispositif de commutation commun (SE3).

14. Transmission à double embrayage selon l'une quelconque des revendications 9 à 13, **caractérisée en ce que** des pignons fous (42, 82) des au moins deux étages de pignons d'engrenages (ZP4, ZP8) de la deuxième transmission partielle (11) sont disposés sur l'arbre de transmission central (2), l'arbre creux de transmission (3) et/ou sur l'arbre secondaire (4) et peuvent être accouplés par le biais de dispositifs de commutation (SE3 ou SE5) à chaque fois à ceux-ci.

15. Transmission à double embrayage selon l'une quelconque des revendications 10 à 14, **caractérisée en ce que** des pignons fous (13, 22) des au moins deux étages de pignons d'engrenages supplémentaires (ZPR, ZP2) de la deuxième transmission partielle (11) sont disposés sur l'arbre de transmission central (2), l'arbre creux de transmission (3) et/ou sur l'arbre secondaire (4) et peuvent être accouplés à chaque fois à ceux-ci par le biais du dispositif de commutation commun (SE4).

16. Transmission à double embrayage selon l'une quelconque des revendications 1 à 15, **caractérisée en ce qu'**au moins une partie de la sortie (15, 16) de la transmission à double embrayage (1) est prévue coaxialement par rapport à l'arbre secondaire (4).

17. Transmission à double embrayage selon l'une quelconque des revendications 1 à 16, **caractérisée en ce qu'**au moins une partie de la sortie (15) de la transmission à double embrayage (1) est prévue coaxialement par rapport à l'arbre de transmission central (2).

18. Transmission à double embrayage selon l'une quelconque des revendications 1 à 17, **caractérisée en ce qu'**au moins une partie de la sortie (15, 16) de la transmission à double embrayage (1) a son axe décalé par rapport à l'arbre secondaire (4) et par rapport à l'arbre de transmission central (2), le décalage d'axe entre la sortie (15, 16) de la transmission à double embrayage (1) et l'arbre secondaire (4) étant réalisé par le biais d'un étage de pignon d'engrenage supplémentaire (17) et l'étage de pignon d'engrenage supplémentaire (17) comprenant un pignon fixe (18 ; 61) disposé sur l'arbre secondaire, qui est de préférence un pignon fixe (61) d'un étage de pignon d'engrenage (ZP6) prévu pour réaliser un rapport de démultiplication ("6") ou un pignon fixe supplémentaire (18).

19. Transmission à double embrayage selon l'une quelconque des revendications 1 à 18, **caractérisée en ce qu'**exactement cinq dispositifs de commutation ((S1, S2), (S3, S4), (S5, S6), (S7, S8), (S9, S10)) sont prévus, par le biais desquels à chaque fois deux étages de pignons d'engrenages ((ZP7, ZP3), (ZP3, ZP5), (ZP5, ZP6), (ZPR, ZP2), (ZP8, ZP4)) peuvent être connectés dans le flux de forces.

20. Transmission à double embrayage selon l'une quelconque des revendications 1 à 19, **caractérisée en ce qu'**exactement huit plans de pignons (ZP2, ZP3, ZP4, ZP5, ZP6, ZP7, ZP8, ZPR) sont prévus, lesquels comprennent à chaque fois des étages de pignon droit avec des rapports de démultiplication discrets ("2", "3", "4", "5", "6", "7", "8", "R2").

21. Transmission à double embrayage selon l'une quelconque des revendications 1 à 20, **caractérisée en ce qu'**au moins deux rapports de démultiplication ("R1", "R2") pour la conduite en marche arrière peuvent être réalisés.

22. Transmission à double embrayage selon l'une quelconque des revendications 1 à 21, **caractérisée en ce qu'**une machine électrique (20) pouvant être connectée dans le flux de forces de la transmission à double embrayage (1) est prévue.
